# EUROPEAN PATENT APPLICATION

(11) **EP 1 740 017 A1**
(43) Date of publication of application: **03.01.2007**
(21) Application number: 06004516.8
(22) Date of filing: 06.03.2006
(51) Int. Cl.: H05B 6/68

(54) **Cooking apparatus with bar code scanner and method for controlling the same**

(30) Priority: 30.06.2005 KR 2005058155
(71) Applicant: Samsung Electronics Co., Ltd., Suwon-si, Gyeonggi-Do (KR)
(72) Inventor: Kim, Kwang Keun, Yeongtong-gu, Suwon-si, Gyeonggi-do (KR); Kim, Jeong Han, Gwonseon-Gu Suwon-Si Gyeonggi-Do (KR)
(74) Representative: Grünecker, Kinkeldey, Stockmair & Schwanhäusser Anwaltssozietät

(57) **Abstract**

A cooking apparatus with a bar code scanner, which recognizes the position of a bar code and automatically adjusts a focus according to the recognized position of the bar code when the bar code is not located within the focal distance of the bar code scanner, and a method for controlling the same. The cooking apparatus includes a sensor for sensing a distance of the bar code from the bar code scanner, a controller for calculating a moving distance of the bar code scanner based on the distance of the bar code from the scanner so that the bar code scanner can recognize the bar code, and a focus adjustor controlled by the controller for moving the bar code scanner to the calculated moving distance.

## Description

### BACKGROUND OF THE INVENTION

### 1. Field of the Invention

The present invention relates to a cooking apparatus with a bar code scanner, and more particularly, to a cooking apparatus with a bar code scanner that senses the position of a bar code and automatically adjusts the focus of the bar code scanner according to the sensed position, and a method for controlling the cooking apparatus.

### 2. Description of the Related Art

Generally, cooking apparatuses for cooking foods include microwave ovens using a microwave, and gas ovens and electric ovens using a heater.

A microwave oven is an apparatus that rapidly heats foods using frictional heat generated from vibration of water molecules contained in the foods, which is caused by a microwave of approximately 2,450MHz generated by applying high-tension current to a magnetron serving as a high-frequency oscillation tube.

When food is cooked using the microwave oven noted above, a user puts the food into a cooking chamber fully aware of information (type, weight, cooking state, etc.) related to the particular food. Then the user manually adjusts the cooking time of the food and the microwave output through an operating panel.

Since the conventional microwave oven cannot obtain the food information, the user must be aware of the food information before the food is cooked and must adjust the cooking time of the food and the microwave output so that the food is cooked to the optimum state.

In order to solve the above-mentioned problems, Korean Patent Laid-Open Publication No. 1999-0035655 proposes a method for recognizing data for food by reading a bar code printed on a food wrapper and automatically cooking the food according to the recognized data.

A microwave oven disclosed by the above Patent includes a bar code reading unit installed on the front surface of an operating panel for reading the bar code printed on the food wrapper and a microcomputer for automatically cooking the food using cooking data corresponding to the read value of the bar code.

The bar code reading unit generally used can decode a signal of a bar code only when a bar code label is located on a standard plane of the bar code reading unit and cannot decode the signal of the bar code when the bar code label is separated from the standard plane of the bar code reading unit by a designated distance (approximately 10 cm). Thus, the bar code must be located within a focal distance of the bar code reading unit, i.e., a designated distance from the bar code reading unit. Unless the bar code is located within the focal distance of the bar code reading unit, the bar code reading unit cannot read the bar code, thereby causing inconvenience to users.

### SUMMARY OF THE INVENTION

Therefore, one aspect of the present invention is to provide a cooking apparatus with a bar code scanner that recognizes the position of a bar code and automatically adjusts a focus according to the recognized position of the bar code when the bar code is not located within the focal distance of the bar code scanner, and a method for controlling the same.

In accordance with one aspect, the present invention provides a cooking apparatus with a bar code scanner for reading cooking data from a bar code, the cooking apparatus including a sensor for sensing a distance of the bar code from the bar code scanner, a controller for calculating a moving distance of the bar code scanner based on the distance of the bar code from the bar code scanner, so that the bar code scanner can recognize the bar code, and a focus adjustor controlled by the controller for moving the bar code scanner to the calculated moving distance.

The sensor may be a bar code position sensor installed on the bar code scanner.

The focus adjustor may include a scanner motor for generating rotary force for moving the bar code scanner and a moving element for moving the bar code scanner back and forth according to the rotation of the scanner motor.

The moving element may include a pinion and a rack. The pinion may be installed on a rotary shaft of the scanner motor, and the bar code scanner may be installed on the rack, so that the bar code scanner changes position based on the rotation of the scanner motor.

The cooking apparatus may further include a key input unit for allowing a user to input cooking instructions. A scan key for operating the bar code scanner may be provided on the key input unit.

The sensor may sense whether or not the bar code approaches the bar code scanner, and the controller may automatically operate the bar code scanner when the sensor senses that the bar code approaches the bar code scanner.

In accordance with another aspect, the present invention provides a method for controlling a cooking apparatus with a bar code scanner for reading cooking data from a bar code including the steps of sensing the distance of the bar code from the bar code scanner, calculating the moving distance of the bar code scanner based on the sensed distance of the bar code from the scanner so that the bar code scanner recognizes the bar code, and moving the bar code scanner to the calculated moving distance to adjust the focus of the bar code scanner.

The sensing of the distance of the bar code from the bar code scanner may be carried out by a bar code position sensor installed on the bar code scanner.

The calculating of the moving distance of the bar code scanner may be carried out by subtracting the focal distance of the bar code scanner from the sensed distance of the bar code from the bar code scanner.

The method may further include inputting cooking instructions by a user, wherein the bar code scanner is operated according to the cooking instructions of the user.

The sensing of the distance of the bar code from the bar code scanner may include sensing whether or not the bar code approaches the bar code scanner and automatically operating the bar code scanner when it is sensed that the bar code approaches the bar code scanner.

In accordance with yet another aspect, the present invention provides a cooking apparatus with a bar code scanner for reading cooking data from a bar code, wherein the bar code scanner automatically moves to a position, for reading the bar code, by sensing the position of the bar code.

When the position of the bar code is sensed, the bar code scanner may be automatically switched to an ON-state.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a schematic perspective view of a cooking apparatus with a bar code scanner of the present invention;
FIG. 2 is a schematic view illustrating components of the present invention;
FIG. 3 is a block diagram of a cooking apparatus with a bar code scanner in accordance with an embodiment of the present invention;
FIG. 4 is a flow chart illustrating a method for controlling a cooking apparatus with a bar code scanner of the present invention in a manual mode; and
FIG. 5 is a flow chart illustrating a method for controlling a cooking apparatus with a bar code scanner of the present invention in an automatic mode.

### DETAILED DESCRIPTION OF THE PREFERRED EMBODIMENTS

Reference will now be made in detail to embodiments of the present invention, examples of which are illustrated in the accompanying drawings, wherein like reference numerals refer to like elements throughout. The embodiments are described below to explain the present invention by referring to the annexed drawings.

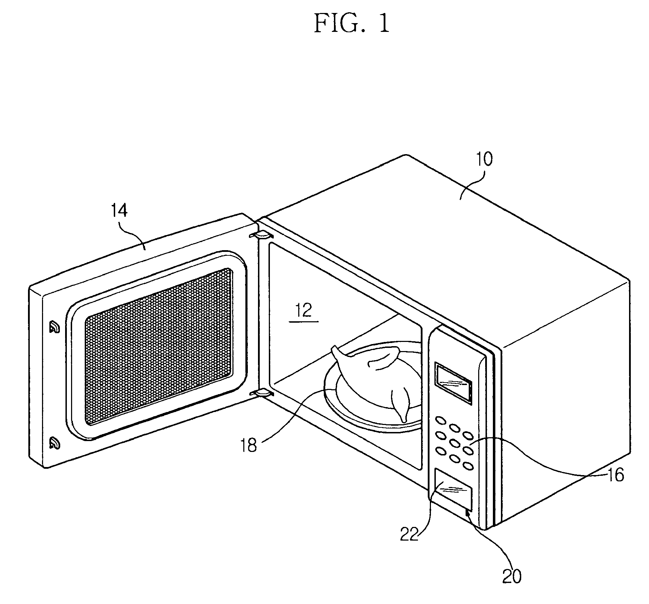

FIG. 1 is a schematic perspective view of a cooking apparatus with a bar code scanner of the present invention.

In FIG. 1, a cooking chamber 12 is formed in a main body 10, a door 14 is rotatably installed on the front surface of the main body 10, and an operating panel 16, for allowing a user to select a desired cooking function and for displaying the selected cooking function and the operating state of the cooking apparatus, is installed, e.g., on the front surface of the main body 10 on the right side of the cooking chamber 12.

A turntable 18 for receiving and rotating food to be cooked is installed in the lower portion of the inside of the cooking chamber 12, and a bar code reading device 20 for reading cooking data from a bar code 31 attached to a food wrapper 30 is installed on the lower portion of the operating panel 16. A scanner window 22 is disposed on the operating panel 16.

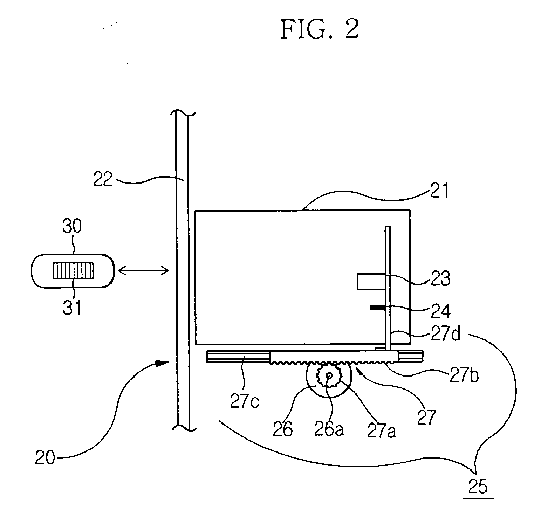

FIG. 2 is a schematic view of the bar code reading device 20 applied to the present invention.

In FIG. 2, the bar code reading device 20 includes a case 21 defining the external appearance thereof, a bar code scanner (or bar code reader) 23 installed in the case 21 for reading a bar code through the scanner window 22 on the operating panel 16, a bar code position sensor 24 connected to the bar code scanner 23 for recognizing the position of the bar code 31 attached to the food wrapper 30, and a focus adjustor 25 for moving the bar code scanner 23 according to the position of the bar code, recognized by the bar code position sensor 24, to automatically adjust the focal distance of the bar code scanner 23.

The focus adjustor 25 includes a scanner motor 26 that generates rotary force for moving the bar code scanner 23 and a scanner-moving element 27 for moving the bar code scanner 23 in accord with the rotation of the scanner motor 26.

The scanner-moving element 27 includes a pinion 27a and a rack 27b. The pinion 27a is axially connected to a rotary shaft 26a of the scanner motor 26. The rack 27b is inserted into a movable rail 27c formed on the lower end of the case 21, such that the rack 27b is engaged with the pinion 27a by the rotation of the pinion 27a and is moved. A stationary element 27d, on which the bar code scanner 23 is installed such that the bar code scanner 23 moves in accord with the rotation of the scanner motor 26, is connected to the rack 27b.

Accordingly, the present invention provides an auto-focusing function in which the position of the bar code attached to the food wrapper of the food to be cooked is automatically recognized regardless of the focal distance of the bar code scanner 23, even when the bar code is located in an area spaced from the bar code reading device 20 beyond a designated distance, and the bar code scanner 23 is moved according to the recognized position of the bar code.

The auto-focusing function (AF) automatically adjusts the focal distance of a camera lens, and is obtained by various methods.

For example, the Visitronic method is referred to as a passive method, in which the contrast of a subject is read, and a near infrared method is referred to as an active method, in which an infrared ray is radiated onto a subject and the distance of the food from a camera lens is calculated using the radiating speed and time of the infrared ray.

Recently, a phase-sensing method, in which the distance of a subject from a camera lens is measured by detecting the difference of incident light from the subject, is mainly used. Most digital cameras are operated by depressing a shutter button halfway, but parts of digital cameras employ a continuous AF method, in which a camera is continuously focused when a liquid crystal display is active.

The bar code scanner 23 is generally known to those skilled in the art, and its detailed description will thus be omitted.

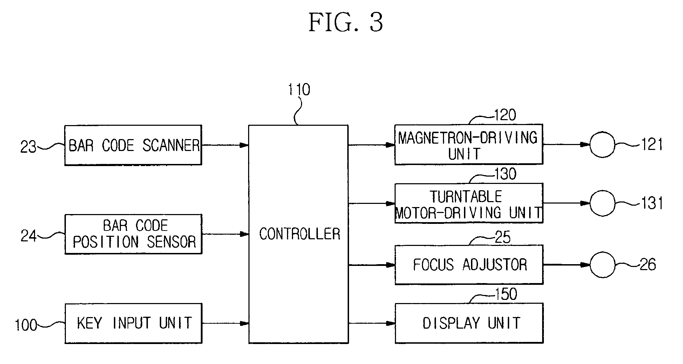

FIG. 3 is a block diagram of a system of a cooking apparatus with a bar code reading device in accordance with the present invention. The cooking apparatus includes the bar code scanner 23, the bar code position sensor 24, the focus adjustor 25, a key input unit 100, a controller 110, a magnetron-driving unit 120, a turntable motor-driving unit 130, and a display unit 150.

The bar code scanner 23 scans a bar code attached to a food wrapper of food to be cooked, and the bar code position sensor 24 automatically recognizes the position of the bar code when the bar code is close to the bar code scanner 23, regardless of the focal distance of the bar code scanner 23.

The key input unit 100 includes a plurality of keys, one of which is a scan key, which is provided on the operating panel 16 so that a user may input desired cooking data (cooking time, cooking menu, microwave output, cooking start/stop time, etc.) to the controller 110. The key input unit 100 further includes the scan key for operating the bar code scanner 23. Otherwise, whenever the bar code approaches the bar code reading device 20, the controller 110 may sense the bar code through the bar code position sensor 24 and automatically operate the bar code scanner 23 so that the bar code scanner 23 scans the bar code.

The controller 110 is a microcomputer for controlling components of the cooking apparatus. The controller 110 obtains corresponding cooking data from a cooking data table, stored in a ROM table of a memory thereof in advance, according to bar code values (type, weight, and cooking state of the food) read by the bar code scanner 23, and thus controls the cooking time of the food and the microwave output. Further, the controller 110 calculates the moving distance of the bar code scanner 23, which is the distance of the bar code from the bar code position sensor minus the focal distance of the bar code scanner, based on the position of the bar code recognized by the bar code position sensor 24.

When the resulting value of the moving distance of the bar code scanner 23 is positive (+), the controller 110 controls the bar code scanner 23 to move towards the bar code, and when the resulting value of the moving distance of the bar code scanner 23 is negative (-), the controller 110 controls the bar code scanner 23 to move away from the bar code.

The magnetron-driving unit 120 includes a relay for controlling the operation of a magnetron 121 to generate a microwave according to the control signal of the controller 110. The turntable motor-driving unit 130 controls the operation of a turntable motor 131 to rotate the turntable 18 according to the control signal of the controller 110.

The focus adjustor 25 controls the operation of the scanner motor 26 to adjust a lens of the bar code scanner 23 in proportion to the moving distance calculated by the controller 110.

The display unit 150 displays the cooking time or the cooking menu, which is inputted by a user, on the operating panel 16 according to the control signal of the controller 110, or displays the obtained cooking data according to the bar code values.

Hereinafter, the operation of the cooking apparatus with the bar code scanner of the present invention and the function and effects of the method for controlling the cooking apparatus will be described.

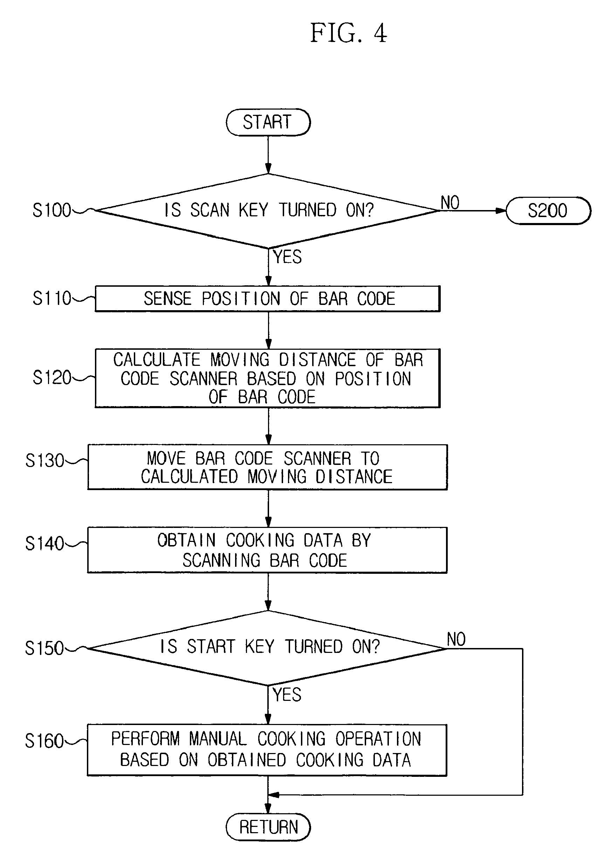

FIG. 4 is a flow chart illustrating a method for controlling the cooking apparatus with the bar code scanner of the present invention in a manual mode.

First, when a user presses the scan key installed on the front surface of the operating panel 16 in order to confirm cooking data before food to be cooked (frozen or cold food) is placed on the turntable 18 in the cooking chamber 12, an ON-signal of the scan key selected by the user is inputted to the controller 110 through the key input unit 100 (S100).

Then, the controller 110 stands by for reading a bar code value for confirming the cooking data from the bar code scanner 23 before the cooking operation is performed.

When, in the above stand-by state, a bar code attached to a food wrapper is close to the bar code reading device 20 installed on the front surface of the operating panel 16, the bar code position sensor 24 automatically senses the position of the bar code, and inputs the sensed position of the bar code to the controller 110 (S110).

The controller 110 recognizes the position of the bar code inputted from the bar code position sensor 24 and calculates the moving distance of the bar code scanner 23 based on the recognized position of the bar code and the focal distance of the lens of the bar code scanner 23 (S120).

Then, the controller 110 outputs a control signal, for moving the bar code scanner 23 back or forth the calculated moving distance, to the focal adjustor 25.

The focal adjustor 25 operates the scanner motor 26 in the clockwise or counterclockwise direction according to the control signal of the controller 110, thereby rotating the pinion 27a axially connected to the rotary shaft 26a of the scanner motor 26. When the pinion 27a is rotated, the rack 27b engaged with the pinion 27a moves back or forth along the movable rail 27c, and the stationary member 27d connected to the rack 27b moves back or forth. Therefore, the bar code scanner 23 installed on the stationary member 27d moves back or forth, thus adjusting the focal distance of the bar code scanner 23 (S130).

After the bar code scanner 23 moves back or forth by the rotation of the scanner motor 26 as described above, the bar code scanner 23 reads the bar code attached to the food wrapper.

Here, the moving distance of the bar code scanner 23 is approximately 5 cm. In consideration that the sensing distance of the bar code scanner 23 is generally 5 cm, it is possible to approximately double the focal distance of the bar code scanner 23. That is to say, the bar code scanner 23 more easily reads a bar code located outside the focal distance thereof.

The controller 110 obtains corresponding cooking data from the cooking data table, stored in advance, according to the bar code values read by the bar code scanner 23, and calculates the optimum cooking time and microwave output suitable for the food (S140).

Thereafter, when the user presses the start key (S150), the controller 110 controls the cooking time and the microwave output according to the obtained cooking data, thereby performing a manual cooking operation (S160).

The display unit 150 installed on the operating panel 16 may output a cooking guide message, thereby guiding the user to perform the cooking operation.

As described above, the method for adjusting the focus of the bar code scanner 23 by moving the bar code scanner 23 based on the position of the bar code in the manual mode was described. Hereinafter, a method for adjusting the focus of the bar code scanner 23 in an automatic mode will be described.

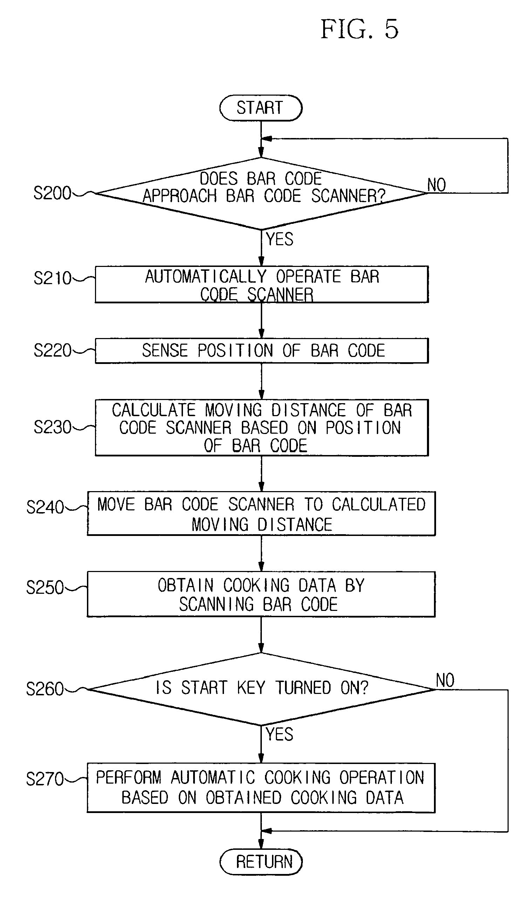

FIG. 5 is a flow chart illustrating a method for controlling the cooking apparatus with the bar code scanner of the present invention in the automatic mode.

When a bar code attached to a food wrapper of food to be cooked is close to the bar code reading device 20 installed on the front surface of the operating panel 16, the bar code position sensor 24 senses whether or not the bar code approaches the bar code reading device 20 (S200).

When the bar code position sensor 24 senses that the bar code approaches the bar code reading device 20, the controller 110 automatically operates the bar code scanner 23 and stands by for reading bar code values from the bar code scanner 23 (S210).

In the above stand-by state, the bar code position sensor 24 automatically senses the position of the bar code and inputs the sensed position of the bar code to the controller 110 (S220).

The controller 110 recognizes the position of the bar code inputted from the bar code position sensor 24, and calculates the moving distance of the bar code scanner 23 based on the recognized position of the bar code and the focal distance of the lens of the bar code scanner 23 (S230).

Then, the controller 110 outputs a control signal, for moving the bar code scanner 23 back or forth to the calculated moving distance, to the focal adjustor 25.

The focal adjustor 25 operates the scanner motor 26 in the clockwise or counterclockwise direction according to the control signal of the controller 110, thereby rotating the pinion 27a axially connected to the rotary shaft 26a of the scanner motor 26. When the pinion 27a is rotated, the rack 27b engaged with the pinion 27a moves back or forth along the movable rail 27c, and the stationary member 27d connected to the rack 27b moves back or forth. Therefore, the bar code scanner 23 installed on the stationary member 27d moves back or forth, thus adjusting the focal distance of the bar code scanner 23 (S240).

After the bar code scanner 23 moves back or forth by the rotation of the scanner motor 26 as described above, the bar code scanner 23 reads the bar code attached to the food wrapper.

Then, the controller 110 obtains corresponding cooking data from the cooking data table, stored in advance, according to the bar code values read by the bar code scanner 23, and calculates the optimum cooking time and microwave output suitable for the food (S250).

Thereafter, when the user presses the start key (S260), the controller 110 controls the cooking time and the microwave output according to the obtained cooking data, thereby performing an automatic cooking operation (S270).

Although the embodiments of the present invention describe a microwave oven, the present invention is not limited thereto, and is applicable to any apparatus with the bar code scanner 23.

As apparent from the above description, the present invention provides a cooking apparatus with a bar code scanner, which recognizes the position of a bar code and automatically adjusts a focus according to the recognized position of the bar code when the bar code is not located within the focal distance of the bar code scanner, and a method for controlling the same, thereby easily reading a bar code label distant from a standard plane beyond a designated distance.

Although embodiments of the invention have been shown and described, it would be appreciated by those skilled in the art that changes may be made in these embodiments without departing from the principles and spirit of the invention, the scope of which is defined in the claims and their equivalents.

## Claims

1. A cooking apparatus with a bar code scanner for reading data from a bar code, comprising:
a sensor for sensing a distance of the bar code from the bar code scanner;
a controller for calculating a moving distance of the bar code scanner based on the sensed distance of the bar code from the bar code scanner so that the bar code scanner can recognize the bar code; and
a focus adjustor controlled by the controller for moving the bar code scanner to the calculated moving distance.

2. The cooking apparatus as set forth in claim 1, wherein the sensor is a bar code position sensor connected to the bar code scanner.

3. The cooking apparatus as set forth in claim 1, wherein the focus adjustor comprises:
a scanner motor for generating rotary force for moving the bar code scanner; and
a moving element for moving the bar code scanner between first and second positions according to the rotation of the scanner motor.

4. The cooking apparatus as set forth in claim 3, wherein the moving element comprises a pinion and a rack, the pinion being connected to the scanner motor, and the bar code scanner being installed on the rack, so that the bar code scanner is moved by the rotation of the scanner motor.

5. The cooking apparatus as set forth in claim 1, further comprising a key input unit for allowing a user to input cooking instructions,
wherein a scan key for operating the bar code scanner is provided on the key input unit.

6. The cooking apparatus as set forth in claim 1, wherein the sensor senses whether or not the bar code approaches the bar code scanner and
the controller automatically operates the bar code scanner when the sensor senses that the bar code approaches the bar code scanner.

7. A method for controlling a cooking apparatus with a bar code scanner for reading cooking data from a bar code, comprising:
sensing a distance of the bar code from the bar code scanner;
calculating a moving distance of the bar code scanner based on the sensed distance of the bar code from the bar code scanner so that the bar code scanner recognizes the bar code; and
moving the bar code scanner the calculated moving distance to adjust the focus of the bar code scanner.

8. The method as set forth in claim 7, wherein the sensing of the distance of the bar code from the bar code scanner is carried out by a bar code position sensor connected to the bar code scanner.

9. The method as set forth in claim 7, wherein the calculating of the moving distance of the bar code scanner is carried out by subtracting a focal distance of the bar code scanner from the sensed distance of the bar code from the bar code scanner.

10. The method as set forth in claim 7, further comprising inputting cooking instructions by a user,
wherein the bar code scanner is operated according to the cooking instructions of the user.

11. The method as set forth in claim 7, wherein the sensing of the distance of the bar code from the bar code scanner comprises:
sensing whether or not the bar code approaches the bar code scanner; and
automatically operating the bar code scanner when it is sensed that the bar code approaches the bar code scanner.

12. The method as set forth in claim 7, further comprising selecting a focus adjustor to move the bar code scanner to the moving distance.

13. A cooking apparatus comprising:
a cooking appliance; and
a bar code scanner for reading cooking data from a bar code, the bar code scanner being installed on the cooking appliance;
wherein the bar code scanner automatically moves to a position for reading the bar code, by sensing a distance of the bar code from the bar code scanner.

14. The cooking apparatus as set forth in claim 13, wherein, when the position of the bar code is sensed, the bar code scanner is automatically switched to an ON-state.

15. A method for controlling a cooking apparatus with a bar code scanner for reading data from a bar code, comprising:
determining a moving distance of the bar code scanner based on a distance of the bar code from the bar code scanner so that the bar code scanner recognizes the bar code; and
moving the bar code scanner to the moving distance to adjust the focus of the bar code scanner.

16. The method as set forth in claim 15, further comprising sensing a distance of the bar code from a bar code scanner, wherein the sensing of the distance from the bar code to the bar code scanner is carried out by a bar code position sensor connected to the bar code scanner.

17. The method as set forth in claim 16, further comprising calculating the moving distance of the bar code scanner by subtracting a focal distance of the bar code scanner from the sensed distance of the bar code from the bar code scanner.

18. The method as set forth in claim 17, wherein upon calculating a positive moving distance value, the bar code scanner is directed to move toward the bar code.

19. The method as set forth in claim 17, wherein upon calculating a negative moving distance value, the bar code scanner is directed to move away from the bar code.

20. The method as set forth in claim 15, further comprising selecting a focus adjustor to move the bar code scanner to the moving distance.
